# EUROPÄISCHE PATENTSCHRIFT

(11) **EP 1 523 885 B1**
(45) Veröffentlichungstag und Bekanntmachung des Hinweises auf die Patenterteilung: **05.08.2009**
(21) Anmeldenummer: 04024523.5
(22) Anmeldetag: 14.10.2004
(51) Int. Cl.: A01K 15/02

(54) **Laufband für Pferde**
Running belt for horses
Dispositif pour l'entrainement de cheveaux

(30) Priorität: 16.10.2003 DE 20315944 U
(43) Veröffentlichungstag der Anmeldung: 20.04.2005
(73) Patentinhaber: Mitzel, Siegfried, 86655 Harburg-Grosssorheim (DE)
(72) Erfinder: Mitzel, Siegfried, 86655 Harburg-Grosssorheim (DE)
(74) Vertreter: Prietsch, Reiner

(56) Entgegenhaltungen:
- EP-A- 0 403 924
- DE-U1- 29 507 696
- US-A- 4 981 136
- US-A- 5 433 679

## Beschreibung

Die Erfindung betrifft ein Laufband für Pferde, bestehend aus einem Grundgestell, in welchem ein Rahmen gelagert ist, der zwei parallele, voneinander um mehr als die Breite des Tiers beabstandete Längsträger mit Auflagen für einen mindestens dreilagigen, durchgehenden Tragbelag umfasst, der von unten nach oben eine Stahlblechplatte, eine Dämpfungsplatte aus gebundenem Gummi- oder Kunststoffgranulat und eine Gleitplatte aus kunststoffbeschichtetem Stahl oder Kuststoff umfaßt, auf welcher das Obertrum eines endlosen Gurtbandes läuft, das über eine motorisch angetriebene Umlenkwalze an dem einen Ende des Rahmens und eine freilaufende Umlenkwalze am anderen Ende des Rahmens geführt ist.

Ein derartiges Trainingsgerät ist aus der DE 295 07 696 U1 bekannt. Gegenüber dem älteren Stand der Technik, bei dem das Obertrum des Gurtbandes über seine ganze Länge durch freilaufende Walzen abgestützt war, hat der Tragbelag des Trainingsgeräts nach der DE 295 07 696 U1 den Vorteil einer gleichmäßigen Nachgiebigkeit, die derjenigen von natürlichem (Gras- oder Wald-) Boden nahekommt und sich durch geeignete Wahl der Dicke und Struktur insbesondere der Dämpfungsplatte variieren lässt. Es hat sich jedoch gezeigt, dass auch dann, wenn als Werkstoff für die Gleitplatte ein in der Paarung mit dem Material des Gurtbandes einen niederigen Reibungskoeffizienten aufweisendes Material wie z.B. PTFE (Teflon) gewählt wird, die mehr oder weniger punktförmige Belastung durch die auffußenden Pferdehufe zu einem relativ starken, mit Wärmeentwicklung verbundenen Verschleiß führt, was sich insbesondere auf die Lebensdauer des Gurtbandes nachteilig auswirkt. Zudem kann die Gleichmäßigkeit des Laufes des Gurtbandes durch Abrieb zwischen der Unterseite dessen Obertrums und der darunter befindlichen Gleitplatte beeinträchtigt werden.

Aus der US-A-5 433 679 ist ein Laufband für Menschen bekannt. Auf die Oberseite des Untertrums des Laufbandes wird Schmiermittel aus einem Schmiermittelbehälter über eine Pumpe, Schmiermittelleitungen und eine einzige, mittig angeordnete Düse aufgetragen. Diese Art der Schmierung ist für ein Laufband für Pferde ungeeignet, weil ein Pferdehuf auf einer Fläche des Gurtbandes, die vergleichbar mit der auffussenden Fläche eines menschlichen Fusses ist, eine um mehr als eine Zehnerpotenz größere, dynamische Kraft erzeugt. Die Lösung des Problems einer gleichmäßigen Schmierung sowohl in Längsrichtung als auch insbesondere in Querrichtung des Gurtbandes ist bei einer derart hohen Belastung entscheidend für die Lebensdauer nicht nur des Gurtbandes selbst sondern auch der übrigen, dynamisch beanspruchten Teile des Laufbandes.

Der Erfindung liegt die Aufgabe zugrunde, bei einem Laufband der einleitend angegebenen Gattung die Lebensdauer insbesondere des Gurtbandes erheblich zu steigern.

Diese Aufgabe ist erfindungsgemäß bei einem Gurtband mit den Merkmalen des Oberbegriffes des Anspruches 1 durch die im kennzeichnenden Teil im Anspruch 1 angegebenen Merkmale gelöst.

Über die vier Schmiermittelleitungen kann daher auf die Oberseite des zurücklaufenden Untertrums des Gurtbandes ein geeignetes Schmiermittel aufgebracht werden, so dass sich zwischen der Unterseite des Obertrums und der darunterliegenden Gleitplatte eine über die Breite des Gurtbandes mindestens im Bereich der Auffussung des Pferdes gleichmäßige Schmiermittelschicht bildet. Letztere wirkt stark reibungsmindernd, wodurch sich nicht nur die Lebensdauer des Gurtbandes und auch der Gleitplatte erhöht sondern auch ein gleichmäßiger Lauf des Gurtbandes sichergestellt und die Leistungsaufnahme des Antriebsmotors verringert wird. Infolge der durch die Schmierung kleineren Reibung zwischen der Unterseite des Obertrums des Gurtbandes und der Gleitplatte entsteht auch weniger Reibungswärme unterhalb der Bereiche des Gurtbandes, in denen das Pferd auffußt. Zudem leitet und transportiert die Schmiermittelschicht einen Teil dieser Reibungswärme in benachbarte, unbelastete Flächenbereiche des Gurtbandes und der Gleitplatte.

Ebenfalls zur Ausbildung einer gleichmäßigen Schmiermittelschicht schon am Beginn des Obertrums des Gurtbandes trägt bei, dass die Schmierstoffleitungen in einem Abstand von der vorderen Umlenkwalze münden, der mindestens gleich der Hälfte des Abstandes der Umlenkwalzen, also der nutzbaren Länge des Laufbandes, ist.

Eine Vergleichmäßigung der Nachgiebigkeit des Tragbelages unter dem Obertrum des Gurtbandes wird dadurch erzielt, dass mindestens die Dämmplatte und die Gleitplatte des Tragbelages schwimmend auf den Auflagern ruhen. Bei fester Einspannung des Tragbelages würden Zwangskräfte auftreten können, die kleine Verformungen verursachen, so dass an den entsprechenden Stellen eine erhöhte Reibung zwischen dem Obertrum des Gurtbandes und der Gleitplatte entstehen würde.

Insbesondere weil das Pferd selten an den Rändern des Gurtbandes auffußt, ist es zweckmäßig im mittleren Bereich des Gurtbandes mehr Schmiermittel aufzubringen als nahe den Gurtbandrändern. Dies lässt sich am besten dadurch erreichen, dass die Mündungen der Schmiermittelleitungen von der Längsmittellinie des Gurtbandes einen Abstand von weniger als einem Viertel der Breite des Gurtbandes haben .

Vorzugsweise sind die Schmiermittelleitungen mit einem gemeinsamen Schmiermittelbehälter verbunden .

Zwar könnte grundsätzlich das Schmiermittel aus dem Behälter den Schmiermittelleitungen (und letzten Endes der Unterseite des Obertrums des Gurtbandes) nach Bedarf von Hand ungleichmäßig zugeführt werden. Für den Benutzer bequemer und vor allem gleichmäßig ist jedoch eine selbsttätige Schmierung, die sich dadurch erreichen lässt, dass zwischen dem Schmiermittelbehälter und den Schmiermittelleitungen eine Dosierpumpe angeordnet ist .

Weil das Gurtband nach Verbrauch des Schmiermittels trokkenlaufen würde, mit den eingangs genannten, nachteiligen Folgen, ist der Schmiermittelbehälter zweckmäßig mit einem auf das Unterschreiten eines minimalen Füllstandes ansprechenden Alarmgeber ausgestattet .

Eine kontinuierliche Schmierung ist nicht notwendig. Es reicht, wenn die Dosierpumpe je Dosierhub und Schmiermittelleitung periodisch ca. einen Tropfen Schmiermittel auf das Gurtband dosiert .

Insbesondere kann die Dosierpumpe während der Laufzeit des Gurtbandes periodisch in einem zwischen 45 und 120 Sekunden einstellbaren Zeitintervall einen Dosierhub je Schmiermittelleitung ausführen .

Als Schmiermittel besonders empfehlenswert ist ein hochtemperaturfestes Silikonöl . Letzteres bleibt auch bei winterlich tiefen Temperaturen ausreichend dünnflüssig und behält andererseits bei hohen Sommertemperaturen seine volle Schmierfähigkeit. Alternativ kommt auch ein geeignetes Silikonfett in Betracht.

Bevorzugt hat mindestens eine der Umlenkwalzen ein balliges Profil . Dadurch ist nicht nur sichergestellt, dass das Gurtband nicht seitlich auswandert sondern es wird auch die Verteilung der zunächst diskret aufgebrachten Schmiermitteltropfen in eine zusammenhängende, gleichmäßige Schmiermittelschicht gefördert.

In der Zeichnung ist das Laufband in einer beispielsweise gewählten Ausführungsform schematisch vereinfacht dargestellt. Es zeigt:
- Fig. 1: eine perspektivische Gesamtansicht,
- Fig. 2: eine Seitenansicht lediglich des Rahmens einschließlich des Tragbelages und des Gurtbandes und
- Fig. 3: einen Schnitt längs der Linie A-A in Figur 2.

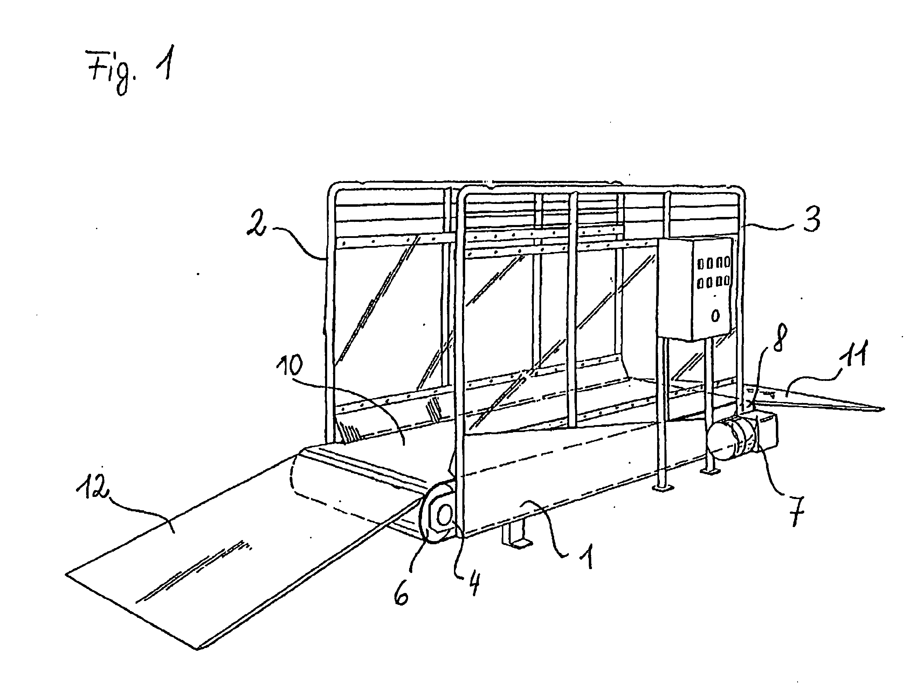

Das in Fig. 1 dargestellte Laufband umfasst ein Grundgestell 1 mit Seitenwänden 2 und 3. In dem Grundgestell 1 ist ein Rahmen 4 gelagert, der an seinem vorderen Ende eine freilaufende Umlenkwalze 6 und an seinem hinteren Ende eine über eine Motor 7 angetriebene Umlenkwalze 8 umfasst. Über die Walzen 6 und 8 läuft ein endloses Gurtband 10. Über eine Rampe 11 kann ein Pferd auf das Gurtband geführt und über eine Rampe 12 von dem Gurtband heruntergeführt werden.

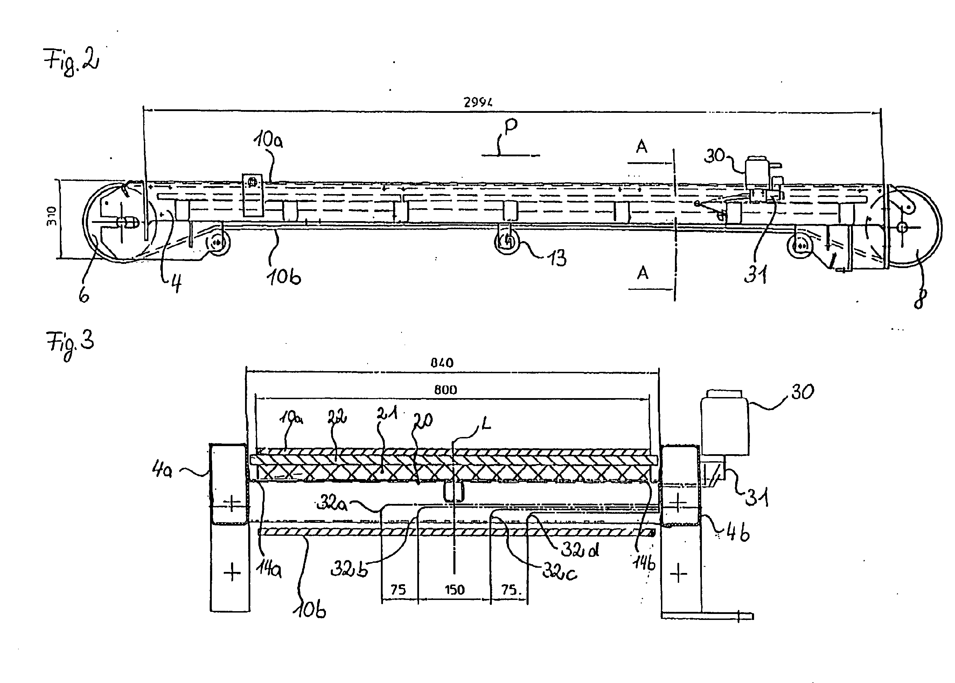

Gemäß Fig. 2 hat das Gurtband ein Obertrum 10a und ein Untertrum b. Das Untertrum ist zwischen den Umlenkwalzen 6 und 8 auf drei kleine Stützwalzen 13 geführt.

Der in Fig. 3 vergrößert dargestellte Querschnitt längs der Linie A-A in Fig. 2 zeigt, dass der Rahmen 4 im wesentlichen aus zwei voneinander beabstandeten Längsträgern 4e und 4b aus je einem Rechteckhohlprofil besteht. An der Innenseite jedes der Längsträger 4e und 4b sind L-Profile als Auflager 14a und 14b befestigt. Auf diesen Auflagern ruht schwimmend ein dreilagiger Tragbelag, der von unten nach oben eine Stahlblechplatte 20, eine Dämmplatte 21 vorzugsweise auf der Basis von Gummigranulat, die beispielsweise eine Wabenstruktur aufweist, und eine vorzugsweise antistatische Gleitplatte 22 aus PTFE, PE oder PA ruht. Auf der Gleitplatte 22 liegt das Obertrum 10a des Gurtbandes auf. An dem rechten Längsträger ist ein auch in Fig. 2 zu erkennender Schmiermittelbehälter 30 befestigt, der mit einer nicht dargestellten, üblichen Füllstandsüberwachung ausgestattet ist und an den unten eine elektrisch betriebene Dosierpumpe 31 angebaut ist. Die Dosierpumpe umfasst vier Dosierzylinder mit gemeinsam angetriebenen Dosierkolben (nicht dargestellt). Von jedem der Dosierzylinder zweigt eine Schmiermittelleitung ab. Die somit vier Schmiermittelleitungen 32a bis 32d sind strichpunktiert gezeichnet. Jede von ihnen endet in geringem Abstand oberhalb des Untertrums 10b des Gurtbandes. Die betreffenden Mündungen liegen symmetrisch zu der angedeuteten Längsmittelebene L des Gurtbandes, wobei die Mündungen der jeweils am weitesten außen liegenden Schmiermittelleitungen 32a bzw. 32d von der Längsmittelebene L einen geringeren Abstand als von dem benachbarten Seitenrand des Gurtbandes bzw. dessen Untertrums 10b haben. Bezogen auf den Abstand der Umlenkwalzen 6 und 8, befinden sich die Mündungen der Schmiermittelleitungen 32a bis 32d im Bereich des durch den Pfeil P in Fig. 2 angedeuteten Laufrichtung des Gurtbandes im Bereich dessen letzten Viertels.

## Patentansprüche

1. Laufband für Pferde, bestehend aus einem Grundgestell (1), in welchem ein Rahmen (4) gelagert ist, der zwei parallele, voneinander um mehr als die Breite des Tiers beabstandete Längsträger (4a, 4b) mit Auflagen (14a, 14 b) für einen mindestens 3-lagigen, durchgehenden Tragbelag (20, 21, 22) umfasst, der von unten nach oben eine Stahlblechplatte (20), eine Dämpfungsplatte (21) und eine Gleitplatte (22) umfasst, auf welcher das Obertrum (10a) eines endlosen Gurtbandes (10) läuft, das über eine motorisch angetriebene Umlenkwalze (8) an dem einen Ende des Rahmens (4) und eine freilaufende Umlenkwalze (6) am anderen Ende des Rahmens (4) geführt ist, **dadurch gekennzeichnet, dass** beidseits der Längsmittellinie (2) des Gurtbandes (10) je zwei Schmiermittelleitungen (32a, 32b, 32c, 32d) oberhalb des Untertrums (10b) des Gurtbandes (10) in einem Abstand von der vorderen Umlenkwalze (6) münden, der mindestens gleich der Hälfte des Abstandes der Umlenkwalzen (6, 8) ist, und dass mindestens die Dämmplatte (21) und die Gleitplatte (22) des Tragbelages schwimmend auf den Auflagern (14a, 14b) ruhen.

2. Laufband nach Anspruch 1, **dadurch gekennzeichnet, dass** die Mündungen der Schmiermittelleitungen (32a bis 32d) von der Längsmittellinie (2) des Gurtbandes (10) einen Abstand von weniger als einem Viertel der Breite des Gurtbandes haben.

3. Laufband nach Anspruch 1 oder 2, **dadurch gekennzeichnet, dass** die Schmiermittelleitungen (32a bis 32d) mit einem gemeinsamen Schmiermittelbehälter (30) verbunden sind. **gekennzeichnet**, dass die Schmiermittelleitungen (32a bis 32d) mit einem gemeinsamen Schmiermittelbehälter (30) verbunden sind.

4. Laufband nach Anspruch 3, **dadurch gekennzeichnet, dass** zwischen dem Schmiermittelbehälter (30) und den Schmiermittelleitungen (32a bis 32d) eine Dosierpumpe (31) angeordnet ist.

5. Laufband nach Anspruch 3 oder 4, **dadurch gekennzeichnet, dass** der Schmiermittelbehälter (30) mit einem auf das Unterschreiten eines minimalen Füllstandes ansprechenden Alarmgeber ausgestattet ist.

6. Laufband nach Anspruch 4 oder 5, **dadurch gekennzeichnet, dass** die Dosierpumpe (31) je Dosierhub und Schmiermittelleitung periodisch ca. einen Tropfen Schmiermittel auf das Untertrum (10b) des Gurtbandes (10) dosiert.

7. Laufband nach einem der Ansprüche 4 bis 6, **dadurch gekennzeichnet, dass** die Dosierpumpe (31) während der Laufzeit des Gurtbandes (10) periodisch in einem zwischen 45 und 120 Sekunden einstellbaren Zeitintervall einen Dosierhub je Schmiermittelleitung (32a bis 32d) ausführt.

8. Laufband nach einem der Ansprüche 1 bis 7, **dadurch gekennzeichnet, dass** das Schmiermittel ein hochtemperaturfestes Silikonöl oder Silikonfett ist.

9. Laufband nach einem der Ansprüche 1 bis 8, **dadurch gekennzeichnet, dass** mindestens eine der Umlenkwalzen (6, 8) ein balliges Profil hat.

## Claims

1. A treadmill for horses, consisting of a base frame (1) in which a frame (4) is mounted which comprises two parallel longitudinal beams (4a, 4b) which are spaced from one another by more than the width of the animal and comprises supports (14a, 14b) for a continuous support covering (20, 21, 22) which comprises at least three layers and, from the bottom to the top, a steel sheet-metal plate (20), a damping plate (21) and a sliding plate (22), on which the upper strand (10a) of an endless belt strap (10) runs which is guided via a motively driven deflecting roller (8) at the one end of the frame (4) and a freely running deflecting roller (6) at the other end of the frame (4), **characterized in that** two lubricant lines (32a, 32b, 32c, 32d) each open above the bottom strand (10b) of the belt strap (10) at a distance from the front deflecting roller (5) on either side of the longitudinal central line (2) of the belt strap (10), which distance is at least equal to half the distance of the deflecting rollers (6, 8), and at least the damping plate (21) and the sliding plate (22) of the support covering rest in a floating manner on the supports (14a, 14b).

2. A treadmill according to claim 1, **characterized in that** the orifices of the lubricant lines (32a to 32d) have a distance of less than one quarter of the width of the belt strap (10) from the longitudinal central line (2).

3. A treadmill according to claim 1 or 2, **characterized in that** the lubricant lines (32a to 32d) are connected to a common lubricant container (30).

4. A treadmill according to claim 3, **characterized in that** a dosing pump (31) is arranged between the lubricant container (30) and the lubricant lines (32a to 32d).

5. A treadmill according to claim 3 or 4, **characterized in that** the lubricant container (30) is equipped with an alarm-signaling system which responds when a minimum filling level has been exceeded.

6. A treadmill according to claim 4 or 5, **characterized in that** the dosing pump (31) periodically doses approximately one drop of lubricant to the bottom strand (10b) of the belt strap (10) for each dosing stroke and each lubricant line.

7. A treadmill according to one of the claims 4 to 6, **characterized in that** the dosing pump (31) periodically performs one dosing stroke for each lubricant line (32a to 32d) in a time interval adjustable between 45 and 120 seconds during the running period of the belt strap (10).

8. A treadmill according to one of the claims 1 to 7, **characterized in that** the lubricant is a high-temperature-resistant silicone oil or silicone grease.

9. A treadmill according to one of the claims 1 to 8, **characterized in that** at least one of the deflecting rollers (6, 8) has a crowned profile.

## Revendications

1. Tapis roulant pour chevaux composé d'un bâti (1) dans lequel est supporté un cadre (4) portant deux longerons (4a, 4b) parallèles espacés l'un de l'autre d'une plus grande distance que la largeur de l'animal avec des appuis (14a, 14b) pour un revêtement portant (20, 21, 22) continu comportant au moins trois épaisseurs, qui comprend de bas en haut une plaque de tôle d'acier (20), une plaque d'amortissement (21) et une plaque de glissement (22) sur laquelle tourne le brin supérieur (10a) d'une courroie (10) sans fin guidée par-dessus un rouleau de renvoi (8) entraîné par un moteur à une extrémité du cadre (4) et un rouleau de renvoi (6) libre à l'autre extrémité du cadre (4)**, caractérisé en ce que** deux conduites de lubrifiant (32a, 32b, 32c, 32d) débouchent de part et d'autre de l'axe longitudinal médian (2) de la courroie (10) au-dessus du brin inférieur (10b) de la courroie (10) à une distance du rouleau de renvoi antérieur (6) au moins égale à la moitié de la distance entre les rouleaux de renvoi (6, 8) et **en ce qu'**au moins la plaque d'amortissement (21) et la plaque de glissement (22) du revêtement portant reposent de façon flottante sur les appuis (14a, 14b).

2. Tapis roulant selon la revendication 1, **caractérisé en ce que** les embouchures des conduites de lubrifiant (32a à 32d) sont distantes de l'axe longitudinal médian (2) de la courroie (10) de moins qu'un quart de la largeur de la courroie.

3. Tapis roulant selon la revendication 1 ou 2, **caractérisé en ce que** les conduites de lubrifiant (32a à 32d) sont reliées à un réservoir de lubrifiant (30) commun.

4. Tapis roulant selon la revendication 3, **caractérisé en ce qu'**une pompe de dosage (31) est disposée entre le réservoir de lubrifiant (30) et les conduites de lubrifiant (32a à 32d).

5. Tapis roulant selon la revendication 3 ou 4, **caractérisé en ce que** le réservoir de lubrifiant (30) est équipé d'un générateur d'alarme qui réagit lorsque le niveau de remplissage passe en dessous d'un minimum.

6. Tapis roulant selon la revendication 4 ou 5, **caractérisé en ce que** la pompe de dosage (31) dose périodiquement à chaque course de dosage et pour chaque conduite de lubrifiant environ une goutte de lubrifiant sur le brin inférieur (10b) de la courroie (10).

7. Tapis roulant selon l'une des revendications 4 à 6, **caractérisé en ce que** la pompe de dosage (31) exécute périodiquement pendant le temps de rotation de la courroie (10), dans un intervalle de temps réglable entre 45 et 120 secondes, une course de dosage pour chaque conduite de lubrifiant (32a à 32d).

8. Tapis roulant selon l'une des revendications 1 à 7, **caractérisé en ce que** le lubrifiant est une huile siliconée ou une graisse siliconée résistante à haute température.

9. Tapis roulant selon l'une des revendications 1 à 8, **caractérisé en ce qu'**au moins un des rouleaux de renvoi (6, 8) a un profil sphérique.
